# EUROPÄISCHE PATENTSCHRIFT

(11) **EP 2 496 412 B1**
(45) Veröffentlichungstag und Bekanntmachung des Hinweises auf die Patenterteilung: **04.05.2016**
(21) Anmeldenummer: 10776568.7
(22) Anmeldetag: 26.10.2010
(51) Int. Cl.: B32B 7/12, B65D 75/28, B65D 85/76

(54) **FOLIENVERPACKUNG**
FOIL PACKAGING
EMBALLAGE EN FILM

(30) Priorität: 02.11.2009 CH 16822009
(43) Veröffentlichungstag der Anmeldung: 12.09.2012
(73) Patentinhaber: Amcor Flexibles Kreuzlingen Ltd., 8280 Kreuzlingen (CH)
(72) Erfinder: PIERRON, Eliane, F-57400 Imling (FR); WOLTERS, Detlef, 79379 Müllheim (DE); BONABEZE, Eric, F-68000 Colmar (FR); DURIN-FRANCE, Agnes, F-30128 Garons (FR); JACOBSEN, Sven, 29683 Bad Fallingbostel (DE); BOIRON, Guy, F-68920 Wintzenheim (FR); TORREGROSA, Juan-Miguel, F-57400 Sarrebourg (FR)
(74) Vertreter: Gernet, Samuel Andreas
(86) Internationale Anmeldenummer: PCT/EP2010/006533
(87) Internationale Veröffentlichungsnummer: WO 2011/050942

(56) Entgegenhaltungen:
- EP-A1- 2 065 316

## Beschreibung

Die Erfindung betrifft eine Folienverpackung für weiche Nahrungsmittelmassen, mit einer aus einem ebenflächigen Zuschnitt zu einem offenen Behälter mit einer Bodenfläche und von der Bodenfläche aufragenden Seitenwänden geformten, eine Aluminiumfolie enthaltenden Behälterfolie und einem gegen die Behälterfolie gesiegelten, den Behälter verschliessenden Deckel aus einem ebenflächigen Zuschnitt einer eine Aluminiumfolie und/oder einen Kunststofffilm enthaltenden Deckelfolie, wobei die Seitenwände des Behälters im Bereich ihrer freien Enden unter Bildung eines umlaufenden, gegen das Behälterinnere gerichteten Siegelrandes auf den im Inneren des Behälters angeordneten Deckel umgelegt und gegen den Deckel gesiegelt sind.

Zur Verpackung von kleinen Portionen Weich- oder Schmelzkäse in der Form von Würfeln Dreiecken, Tetraedern und anderen, für die Verpackung kleiner Massen geeigneten Designs, wie sie etwa als Häppchen bei einem Apéro serviert werden, sind Folienverpackungen aus beschichteten Aluminiumfolien bekannt. Der Käse wird auf einer Abpackmaschine in schmelzflüssigem oder pastösem Zustand portionenweise in aus einer Behälterfolie geformte, oben offene Behälter gefüllt. Nach dem Auflegen von aus einer Deckelfolie geschnittenen Deckeln auf das Füllgut in den offenen Behältern erfolgt ein dichtes Verschliessen durch eine Heisssiegelung der Deckel gegen die Behälter entlang eines umlaufenden Streifens des gegen den Deckel umgelegten Behälterrandes.

Bisher wurden die für Folienverpackungen der vorstehend erwähnten Art verwendeten Aluminiumfolien zum Schutz gegen Korrosion und zur Verbesserung der Haftung von Siegellacken mit einem Grundlack oder Primer lackiert. Damit lässt sich jedoch eine optisch und funktional störende Korrosion bis hin zum Lochfrass der Aluminiumfolie infolge Migration korrosiv wirkender Bestandteile der Käsemasse durch die Lackschichten oder darin enthaltener Fehlstellen nicht in jedem Fall vermeiden.

Aus EP-A-2 065 316 ist eine Folienverpackung der eingangs genannten Art bekannt, bei der die auf der Siegelseite mit einem Polymer extrusionsbeschichtete Behälterfolie und die Deckelfolie auf der jeweiligen Siegelseite mit einem Niedertemperatur-Heisssiegellack beschichtet sind.

Der Erfindung liegt die Aufgabe zugrunde, eine Folienverpackung der eingangs genannten Art zu schaffen, bei der die Aluminiumfolie wirksam gegen Korrosion geschützt ist und eine gute Haftung gegenüber Niedertemperatur-Siegelmedien aufweist.

Zur erfindungsgemässen Lösung der Aufgabe führt, dass die Aluminiumfolie der Behälterfolie mit einem Polymer extrusionsbeschichtet und die Deckelfolie auf der gegen den Siegelrand der Behälterfolie gerichteten Seite mit einem Niedertemperatur-Siegelmedium beschichtet ist.

Ein wesentlicher Vorteil der erfindungsgemässen Folienverpackung wird darin gesehen, dass die Behälterfolie kein Siegelmedium aufweist und demzufolge die bei wasserbasierten Siegellacken erforderliche Trocknung wegfällt. Zudem wir durch das Fehlen eines Siegelmediums die Maschinengängigkeit verbessert und die Maschinengeschwindigkeit kann erhöht werden. Durch eine Coextrusion von zwei oder mehr Polymerschichten kann zudem die Dicke der Beschichtung erhöht werden.

Die häufig bei niedrig siegelnden Lacken oder Polymeren auftretende Blockneigung gewickelter Rollen bei Lagertemperaturen über ca. 25°C kann bei der beschriebenen Behälterfolie durch die eingesetzten Polymere verhindert werden

Bei einer ersten Ausführungsform einer Folienverpackung weist die Deckelfolie eine Aluminiumfolie auf, die auf einer Seite mit dem Niedertemperatur-Siegelmedium und auf der anderen Seite mit einem durch Extrusionsbeschichten aufgetragenen Polymer beschichtet ist.

Bei einer zweiten Ausführungsform einer Folienverpackung weist die Deckelfolie einen einseitig mit einer Metallisierung versehenen Polymerfilm auf, der auf einer Seite mit dem Niedertemperatur-Siegelmedium und auf der anderen Seite mit einem durch Extrusionsbeschichten aufgetragenen Polymer beschichtet ist.

Bei einer dritten Ausführungsform einer Folienverpackung weist die Deckelfolie einen einseitig mit einer Metallisierung versehenen ersten Polymerfilm auf, der auf einer Seite mit dem Niedertemperatur-Siegelmedium und auf der anderen Seite über eine Klebstoffschicht mit einem zweiten Polymerfilm verbunden ist.

Ergänzend sei an dieser Stelle noch erwähnt, dass die Metallisierung aus optischen und nicht aus funktionalen Gründen erfolgt. Die Metallisierung kann auch entfallen.

Bei einer vierten Ausführungsform einer Folienverpackung weist die Deckelfolie eine Aluminiumfolie auf, die auf einer Seite mit dem Niedertemperatur-Siegel-medium und auf der anderen Seite über eine Klebstoffschicht mit einem Polymerfilm verbunden ist.

Die durch Extrusionsbeschichten auf die Aluminiumfolie der Behälterfolie aufgetragene Polymerschicht muss die folgenden Anforderungen erfüllen:
- Frei von chlorierten Substanzen, wie z. B. PVC
- Eignung zum Kontakt mit insbesondere fetthaltigen Nahrungsmitteln
- Haftung auf der Aluminiumfolie
- Schutz der Aluminiumfolie vor chemischer Korrosion
- Siegelbarkeit gegenüber der Niedertemperatur-Siegelschicht der Deckelfolie

Die Anforderungen, welche die durch Extrusionsbeschichten auf die Aluminiumfolie der Deckelfolie aufgetragene Polymerschicht erfüllen muss, sind im wesentlichen gleich wie für die Behälterfolie. Die durch Extrusionsbeschichten auf die Aluminiumfolie der Deckelfolie aufgetragene Polymerschicht kann mit der auf die Aluminiumfolie der Behälterschicht aufgetragenen Polymerschicht identisch sein. Die beiden Polymerschichten können aber auch unterschiedlich aufgebaut sein.

Das Niedertemperatur-Siegelmedium kann eine aus einer wässrigen oder lösemittelbasierten Dispersion von Ethylen-Vinylacetat (EVA), Polyethylen (PE), Polypropylen(PP) oder Ethylen-Acrylsäure-Copolymer (EAA) hergestellte Beschichtung, eine Beschichtung aus einem Lack auf Acrylbasis oder aus einem Hotmelt, eine Extrusionsbeschichtung aus Ethylen-Vinylacetat (EVA), Ethylen-Methylacrylat (EMA) oder aus einem lonomer, eine Extrusionsbeschichtung aus Co- und Terpolymeren von Olefinen oder eine Kaftsiegelschicht (coldseal) umfassen.

Die durch Extrusionsbeschichten auf die Aluminiumfolie der Behälterfolie aufgetragene, ein- oder mehrschichtige Polymerschicht kann eine oder mehrere Schichten aus einem Polyolefin, insbesondere Polyethylen (PE) oder Polypropylen (PP), aus einem lonomer, aus Terpolymer, insbesondere Ethylen-Vinylacetat (EVA), Ethylen-Methylacrylat (EMA) oder Ethylen-Acrylsäure-Copolymer (EAA), aus Polyamid (PA), Polyestern oder Polylactid (Polymilchsäure, PLA) oder einer Kombination der vorgenannten Werkstoffe umfassen. Die Beschichtungen können Monoschichten sein oder auch aus mehreren Schichten aufgebaut sein. Die Beschichtungen können geeignete Zusätze enthalten, wie z. B. Gleitmittel, Antiblockmittel, mineralische Zusätze, antistatische Zusätze oder Pigmente.

Die Polymerfilme der Deckelfolie sind bevorzugt mono-, biaxial oder nicht gereckte Filme aus Polyethylen (PE), Polypropylen (PP), Polyethylenterephthalat (PET), Polyamid (PA), Polylactid (Polymilchsäure, PLA) oder geschäumtem OPP - auch unter dem Begriff OPP pearl oder pearlized bekannt. Diese Polymerfilme können aus funktionalen oder optischen Gründen auch mit einem Anteil anorganischer Füllstoffe, wie z. B. Talkum, Kreide, Titandioxid, Siliziumdioxid, ausgestattet sein. Weiter können diese Polymerfilme mit einer Barrierebeschichtung aus beispielsweise EVOH, SiOₓ oder AlOₓ ausgestattet und weiss transparent oder metallisiert sein.

Das Niedertemperatur-Siegelmedium ist bevorzugt ein Siegelmedium, das bereits bei Temperaturen ab z. B. 50 °C siegelt.

Die Aluminiumfolie der Behälterfolie und der Deckelfolie ist bevorzugt mit einem Flächengewicht von 1 bis 10 g/m², insbesondere 2 bis 8 g/ m², mit dem Polymer beschichtet.

Die Dicke der Aluminiumfolie der Behälterfolie und der Deckelfolie beträgt bevorzugt etwa 5 bis 15 µm, insbesondere 6 bis 12 µm.

Die erfindungsgemässe Folienverpackung eignet sich insbesondere zur Verpackung weicher Nahrungsmittelmassen, insbesondere in der Form eines Quaders bzw. Würfels. Geeignete weiche Nahrungsmittelmassen sind neben Weich- bzw. Schmelzkäse z.B. Bonbons, Margarine, Butter, oder Bouillons.

Die Aluminiumfolie der erfindungsgemässen Folienverpackung weist ausgezeichnete, für Verpackungen der vorgenannten Art erforderliche Dead Fold Eigenschaften auf.

Die erfindungsgemässe Folienverpackung kann zusätzlich mit aus dem Stand der Technik bekannten Öffnungshilfen, wie z. B. Aufreissstreifen- oder -fäden, oder durch Orientierung der Folie in Aufreissrichtung, ausgestattet sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine Schrägsicht auf eine würfelförmige Folienverpackung;
- Fig. 2: einen senkrechten Schnitt durch die Folienverpackung von Fig. 1 nach deren Line I-I mit einer ersten Ausführungsform eines Deckels;
- Fig. 3: einen senkrechten Schnitt durch die Folienverpackung von Fig. 1 nach deren Line I-I mit einer zweiten Ausführungsform eines Deckels;
- Fig. 4: einen Querschnitt durch die Behälterfolie der Folienverpackung von Fig. 2;
- Fig. 5 - 8: einen Querschnitt durch verschiedene Ausführungsformen von Deckelfolien für die Behälterfolie von Fig. 4.

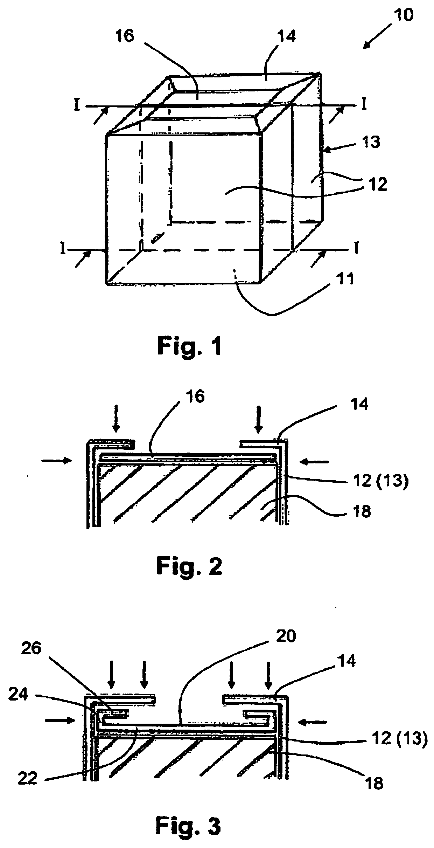

Eine in Fig. 1 dargestellte, würfelförmige Folienverpackung 10 für weiche Füllgutmassen 18, wie z. B. Schmelz- oder Weichkäse in der Form von Apérowürfeln, umfasst einen Behälter 13 mit einer Bodenfläche 11 mit von dieser aufragenden Seitenwänden 12, deren freie Ränder unter Bildung eines umlaufenden Siegelrandes 14 um einen Winkel von 90° nach innen umgelegt sind. Von der Innenseite der Verpackung ist ein Deckel 16 gegen den Siegelrand 14 heiss gesiegelt.

Die in Fig. 2 dargestellte Folienverpackung 10 weist einen Deckel 16 mit ungefalteter, ebener quadratischer Deckfläche auf. Die mit Pfeilen dargestellte Heisssiegelung des Deckels 16 gegen den Siegelrand 14 des Behälters 13 erfolgt mit entsprechenden Siegelwerkzeugen von oben und von der Seite gegen eine Füllgutmasse 18, die vorgängig in flüssiger Form in die auf einer Verpackungsmaschine aus einer Behälterfolie 30 vorgeformten, oben offenen Behälter 13 portioniert eingefüllt wird.

Grundsätzlich ist es möglich, durch geeignete Wahl eines auf die Einfülltemperatur des Füllgutes abgestimmten Niedertemperatur-Siegellackes eine Siegelung durch die beim Abfüllen heisse Füllgutmasse 18 ohne Siegelwerkzeug bereits bei einer Füllguttemperatur ab etwa 50 °C zu erreichen.

Bei der in Fig. 3 gezeigten Ausführungsform einer Folienverpackung 10 weist der Deckel 20 eine quadratische Basisfläche 22 mit zweimal um einen Winkel von 90° nach oben und innen umgelegten Rändern mit nach innen gerichteten Schnittkanten 23 auf, so sich dass zu den Seitenwänden 12 des Behälters 13 parallele Seitenflächen 24 und zum Siegelrand 14 des Behälters 13 parallele Siegelflächen 26 ergeben. Wie im Beispiel von Fig. 2 erfolgt die mit Pfeilen dargestellte Heisssiegelung des Deckels 20 gegen den Siegelrand 14 des Behälters 13 mit entsprechenden Siegelwerkzeugen von oben und von der Seite Seiten gegen die Füllgutmasse 18, die vorgängig in flüssiger Form in die auf einer Verpackungsmaschine aus einer Behälterfolie 30 vorgeformten, oben offenen Behälter 13 portioniert eingefüllt wird.

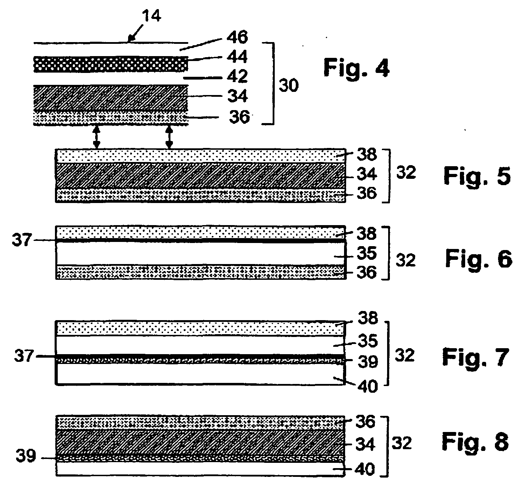

Eine in Fig. 4 gezeigte Behälterfolie 30 mit einer Aluminiumfolie 34 weist auf der bei der Folienverpackung 10 nach aussen gerichteten Seite der Aluminiumfolie 34 nacheinander eine Vorlackschicht 42, eine Bedruckung 44 und optional eine aussenseitige Schutzlackschicht 46 auf.

Auf der gegen die Füllgutmasse 18 gerichteten Siegelseite ist die Aluminiumfolie 34 mit einem durch Extrusionsbeschichten aufgetragenen Polymer 36 beschichtet. Die Polymerschicht 36 dient hier sowohl als siegelbares Medium für eine auf einer Deckelfolie 32 angeordneten Niedertemperatur-Heisssiegelschicht 38 als auch als Korrosionsschutzschicht.

Eine zur Herstellung des Deckels 16 verwendete erste Deckelfolie 32 weist gemäss Fig. 5 eine Aluminiumfolie 34 als Trägerschicht auf, deren Siegelseite mit einer Niedertemperatur-Heisssiegelschicht 38 beschichtet ist. Die gegen die Füllgutmasse 18 gerichtete Seite der Aluminiumfolie 34 ist mit einem durch Extrusionsbeschichten aufgetragenen Polymer beschichtet. Die Polymerschicht 36 übernimmt hier ausschliesslich die Funktion einer Korrosionsschutzschicht.

Eine zur Herstellung des Deckels 16 verwendete zweite Deckelfolie 32 weist gemäss Fig. 6 einen optional einseitig mit einer Metallisierung 37 versehenen Polymerfilm 35 als Trägerschicht auf, deren Siegelseite mit einer Niedertemperatur-Heisssiegelschicht 38 beschichtet ist. Die Metallisierung 37 ist auf der Siegelseite des Polymerfilms 35 angeordnet. Die gegen die Füllgutmasse 18 gerichtete Seite des Polymerfilms 35 ist mit einem durch Extrusionsbeschichten aufgetragenen Polymer beschichtet. Die Polymerschicht 36 übernimmt hier ausschliesslich die Funktion einer Korrosionsschutzschicht.

Eine zur Herstellung des Deckels 16 verwendete dritte Deckelfolie 32 weist gemäss Fig. 7 einen optional mit einem Metallisierung 37 versehenen ersten Polymerfilm 35 auf, dessen Siegelseite mit einer Niedertemperatur-Heisssiegelschicht 38 beschichtet ist. Die metallisierte Seite des ersten Polymerfilms 35 ist über eine Klebstoffschicht 39 mit einem zweiten Polymerfilm 40 verbunden.

Eine zur Herstellung des Deckels 16 verwendete vierte Deckelfolie 32 weist gemäss Fig. 8 eine Aluminiumfolie 34 auf, deren Siegelseite mit einer Niedertemperatur-Heisssiegelschicht 38 beschichtet ist. Die gegen die Füllgutmasse 18 gerichtete Seite der Aluminiumfolie 34 ist über eine Klebstoffschicht 39 mit einem Polymerfilm 40 verbunden.

Bei einer Kombination der Behälterfolie 30 von Fig. 4 und der Deckelfolie 32 gemäss den Fig. 5-8 erfolgt die Siegelung im Bereich der Siegelränder 14 zwischen der Polymerschicht 36 der Behälterfolie 30 und der Niedertemperatur-Heisssiegelschicht 38 der Deckelfolie 32. Die Siegeltemperatur liegt bei einem Niedertemperatur-Heisssiegellack je nach Zusammensetzung zwischen etwa 50° und 120°C.

In den Beispielen der Fig. 5 bis 8 liegt die Dicke der Aluminiumfolie bevorzugt zwischen etwa 5 und 9 µm, insbesondere zwischen etwa 6 und 8 µm, und die Dicke der Polymerfilme zwischen etwa 6 und 60 µm.

## Patentansprüche

1. Folienverpackung für weiche Nahrungsmittelmassen, mit einer aus einem ebenflächigen Zuschnitt zu einem offenen Behälter (13) mit einer Bodenfläche (11) und von der Bodenfläche (11) aufragenden Seitenwänden (12) geformten, eine Aluminiumfolie (34) enthaltenden Behälterfolie (30) und einem gegen die Behälterfolle (30) gesiegelten, den Behälter (13) verschliessenden Deckel (16) aus einem ebenflächigen Zuschnitt einer eine Aluminiumfolie (34) und/oder einen Kunststofffilm (35) enthaltenden Deckelfolle (32), wobei die Seitenwände (12) des Behälters (13) im Bereich ihrer freien Enden unter Bildung eines umlaufenden, gegen das Behälterinnere gerichteten Siegelrandes (14) auf den im Inneren des Behälters (13) angeordneten Deckel (16) umgelegt und gegen den Deckel(16) gesiegelt sind, wobei die Deckelfolie (32) auf der gegen den Siegelrand (14) der Behälterfolie (30) gerichteten Seite mit einem NiedertemperaturSiegelmedium (38) beschichtet Ist,
**dadurch gekennzeichnet, dass**
die Aluminiumfolie (34) der Behälterfolie (30) auf der gegen die Füllgutmasse (18) gerichteten Siegelseite mit einer Polymerschicht (36) extrusionsbeschichtet ist, wobei die Siegelränder (14) zwischen der Polymerschicht (36) der Behälterfolle (30) und der NiedertemperaturHelsssiegelschicht (38) der Deckelfolie (32) gesiegelt sind, und die Polymerschicht (36) eine ein- oder mehrschichtige Polymerschicht ist, wobei die Polymerschicht (36) wenigstens zwei Werkstoffe aus der Gruppe der Polyolefine, lonomere, Terpolymere, Polyamide, Polyester oder Polylactide enthält.

2. Folienverpackung nach Anspruch 1, **dadurch gekennzeichnet, dass** die Deckelfolie (32) eine Aluminiumfolie (34) aufweist, die auf einer Seite mit dem Niedertemperatur-Siegelmedium (38) und auf der anderen Seite mit einer durch Extrusionsbeschichten aufgetragenen Polymerschicht (36) beschichtet ist.

3. Folienverpackung nach Anspruch 1, **dadurch gekennzeichnet, dass** die Deckelfolie (32) einen optional einseitig mit einer Metallisierung (37) versehenen Polymerfilm (35) aufweist, der auf einer Seite mit dem Niedertemperatur-Siegelmedium (38) und auf der anderen Seite mit einer durch Extrusionsbeschichten aufgetragenen Polymerschicht (36) beschichtet ist.

4. Folienverpackung nach Anspruch 1, **dadurch gekennzeichnet, dass** die Deckelfolie (32) einen optional einseitig mit einer Metallisierung (37) versehenen ersten Polymerfilm (35) aufweist, der auf einer Seite mit dem Niedertemperatur-Siegelmedium (38) und auf der anderen Seite über eine Klebstoffschicht (39) mit einem zweiten Polymerfilm (40) verbunden ist.

5. Folienverpackung nach Anspruch 1, **dadurch gekennzeichnet, dass** die Deckelfolie (32) eine Aluminiumfolie (34) aufweist, die auf einer Seite mit dem Niedertemperatur-Siegelmedium (38) und auf der anderen Seite über eine Klebstoffschicht (39) mit einem Polymerfilm (40) verbunden ist.

6. Folienverpackung nach einem der Ansprüche 1 bis 5, **dadurch gekennzeichnet, dass** die Aluminiumfolie (34) der Behälterfolie (30) und der Deckelfolie (32) eine Dicke von 5 bis 15 µm, vorzugsweise 6 bis 12 µm, aufweist.

7. Folienverpackung nach einem der Ansprüche 1 bis 6, **dadurch gekennzeichnet, dass** die Aluminiumfolie (34) der Behälterfolie (30) und gegebenenfalls der Deckelfolie (32) mit einem Flächengewicht von 1 bis 10 g/m², vorzugsweise 2 bis 8 g/m², mit dem Polymer (36) beschichtet ist.

8. Folienverpackung nach einem der Ansprüche 1 bis 7, **dadurch gekennzeichnet, dass** die durch Extrusionsbeschichten auf die Aluminiumfolie (34) der Behälterfolie (30) aufgetragene Polymerschicht (36) ein Flächengewicht von 1 bis 10 g/m², vorzugsweise 2 bis 8 g/m², aufweist.

9. Folienverpackung nach einem der Ansprüche 1 bis 8, **dadurch gekennzeichnet, dass** das Niedertemperatur-Siegelmedium (38) eine aus einer wässrigen Dispersion von Ethylen-Vinylacetat (EVA), Ethylen-Acrylsäure-Copolymer (EAA), Polyethylen (PE) oder Polypropylen (PP) hergestellte Beschichtung, eine Beschichtung aus einem Lack auf Acrylbasis oder einem Hotmelt, eine Extrusionsbeschichtung aus Ethylen-Vinylacetat (EVA), Ethylen-Methylacrylat (EMA) oder aus einem lonomer, eine Extrusionsbeschichtung aus Co- und Terpolymeren von Olefinen oder eine Kaltsiegelschicht (coldseal) umfasst.

10. Folienverpackung nach einem der Ansprüche 1 bis 9, **dadurch gekennzeichnet, dass** die Polymerfilme (35, 40) der Deckelfolie (32) mono-, biaxial oder nicht gereckte Filme aus Polyethylen (PE), Polypropylen (PP), Polyethylenterephthalat (PET), Polyamid (PA) oder Polylactid (Polymilchsäure, PLA) sind.

## Claims

1. Foil packaging for food masses, comprising a container foil (30) which is formed, from a planar blank, into an open container (13) having a bottom surface (11) and side walls (12) projecting up from the bottom surface (11), and which contains an aluminium foil (34), and comprising a lid (16) which is sealed with respect to the container foil (30), closes the container (13) and is made from a planar blank of a lid foil (32) containing an aluminium foil (34) and/or a plastics film (35), the side walls (12) of the container (13) being folded over, in the region of their free ends, onto the lid (16) arranged inside the container (13), thus forming a circumferential seal edge (14) which is oriented towards the inside of the container (13), and being sealed with respect to the lid (16), the lid foil (32) being coated with a low-temperature sealing medium (38) on the side that is oriented towards the seal edge (14) of the container foil (30), **characterised in that** the aluminium foil (34) of the container foil (30) is extrusion-coated with a polymer layer (36) on the seal side that is oriented towards the packaged product (18), the seal edges (14) being sealed between the polymer layer (36) of the container foil (30) and the low-temperature heat-sealing layer (38) of the lid foil (32), and the polymer layer (36) being a single or multi layered polymer layer, the polymer layer (36) containing at least two active ingredients from the group of polyolefins, ionomers, terpolymers, polyamides, polyesters or polylactides.

2. Foil packaging according to claim 1, **characterised in that** the lid foil (32) comprises an aluminium foil (34), one side of which is coated with the low-temperature sealing medium (38) and the other side of which is coated with a polymer layer (36) that is applied by extrusion coating.

3. Foil packaging according to claim 1, **characterised in that** the lid foil (32) comprises a polymer film (35) which is optionally provided with a metal coating (37) on one of its sides, and one side of which film is coated with the low-temperature sealing medium (38) and the other side of which is coated with a polymer layer (36) that is applied by extrusion coating.

4. Foil packaging according to claim 1, **characterised in that** the lid foil (32) comprises a first polymer film (35) which is optionally provided with a metal coating (37) on one of its sides, and one side of which film is connected to the low-temperature sealing medium (38) and the other side of which is connected to a second polymer film (40) by means of an adhesive layer (39).

5. Foil packaging according to claim 1, **characterised in that** the lid foil (32) comprises an aluminium foil (34), one side of which is connected to the low-temperature sealing medium (38) and the other side of which is connected to a polymer film (40) by means of an adhesive layer (39).

6. Foil packaging according to any of claims 1 to 5, **characterised in that** the aluminium foil (34) of both the container foil (30) and the cover foil (32) has a thickness of between 5 and 15 µm, preferably of between 6 and 12 µm.

7. Foil packaging according to any of claims 1 to 6, **characterised in that** the aluminium foil (34) of the container foil (30), and optionally of the lid foil (32), is coated with the polymer (36) having a weight per unit area of between 1 and 10 g/m², preferably of between 2 and 8 g/m².

8. Foil packaging according to any of claims 1 to 7, **characterised in that** the polymer layer (36) that is applied to the aluminium foil (34) of the container foil (30) by extrusion coating has a weight per unit area of between 1 and 10 g/m², preferably of between 2 and 8 g/m².

9. Foil packaging according to any of claims 1 to 8, **characterised in that** the low-temperature sealing medium (38) comprises a coating produced from an aqueous dispersion of ethylene vinyl acetate (EVA), ethylene acrylic acid copolymer (EAA), polyethylene (PE) or polypropylene (PP), a coating made of an acrylic-based paint or a hot-melt adhesive, an extrusion coating made of ethylene vinyl acetate (EVA), ethylene methacrylate (EMA) or an ionomer, an extrusion coating made of olefin copolymers or terpolymers, or a cold seal layer.

10. Foil packaging according to any of claims 1 to 9, **characterised in that** the polymer films (35, 40) of the lid foil (32) are monoaxially stretched, biaxially stretched or unstretched films made of polyethylene (PE), polypropylene (PP), polyethylene terephthalate (PET), polyamide (PA) or polylactide (polylactic acid, PLA).

## Revendications

1. Emballage à films pour des masses alimentaires molles, avec un film de récipient (30) contenant un film d'aluminium (34), formé à partir d'une pièce découpée de surface plane en un récipient ouvert (13) avec une surface de fond (11) et des parois latérales (12) se dressant à partir de la surface de fond (11) et un couvercle (16) fermant le récipient (13), scellé contre le film de récipient (30), constitué d'une pièce découpée de surface plane d'un film de couvercle (32) contenant un film d'aluminium (34) et/ou un film plastique (35), les parois latérales (12) du récipient (13) étant repliées dans le domaine de leurs extrémités libres en formant un bord de scellement (14) circulaire, dirigé contre l'intérieur du récipient sur le couvercle (16) disposé à l'intérieur du récipient (13) et étant scellées contre le couvercle (16), le film de couvercle (32) étant revêtu sur le côté dirigé contre le bord de scellement (14) du film de récipient (30) avec un milieu de scellement à faible température,
**caractérisé en ce que**
le film d'aluminium (34) du film de récipient (30) est revêtu par extrusion sur le côté de scellement dirigé contre la masse à charger (18) d'un revêtement de polymère (36), les bords de scellement (14) entre la couche de polymère (36) du film de récipient (30) et la couche de scellement à chaud à faible température (38) du film de couvercle (32) sont scellés, et la couche de polymère (36) est une couche de polymère mono- ou multi-couche, la couche de polymère (36) contenant au moins deux matériaux du groupe des polyoléfines, ionomères, terpolymères, polyamides, polyesters ou polylactides.

2. Emballage à films selon la revendication 1, **caractérisé en ce que** le film de couvercle (32) présente un film d'aluminium (34), lequel est revêtu sur un côté du milieu de scellement à faible température (38) et sur l'autre côté d'une couche de polymère (36) appliquée par revêtement par extrusion.

3. Emballage à films selon la revendication 1, **caractérisé en ce que** le film de couvercle (32) présente un film de polymère (35) muni éventuellement sur un côté d'une métallisation (37), lequel est revêtu sur un côté du milieu de scellement à faible température (38) et sur l'autre côté d'une couche de polymère (36) appliquée par revêtement par extrusion.

4. Emballage à films selon la revendication 1, **caractérisé en ce que** le film de couvercle (32) présente un premier film de polymère (35) muni éventuellement sur un côté d'une métallisation (37), lequel est lié sur un côté au milieu de scellement à faible température (38) et sur l'autre côté à un second film de polymère (40) par l'intermédiaire d'une couche d'adhésif (39).

5. Emballage à films selon la revendication 1, **caractérisé en ce que** le film de couvercle (32) présente un film d'aluminium (34), lequel est lié sur un côté au milieu de scellement à faible température (38) et sur l'autre côté à un film de polymère (40) par l'intermédiaire d'une couche d'adhésif (39).

6. Emballage à films selon l'une quelconque des revendications 1 à 5, **caractérisé en ce que** le film d'aluminium (34) du film de récipient (30) et du film de couvercle (32) présente une épaisseur de 5 à 15 µm, de préférence de 6 à 12 µm.

7. Emballage à films selon l'une quelconque des revendications 1 à 6, **caractérisé en ce que** le film d'aluminium (34) du film de récipient (30) et éventuellement du film de couvercle (32) est revêtu du polymère (36) avec une masse superficielle de 1 à 10 g/m², de préférence de 2 à 8 g/m².

8. Emballage à films selon l'une quelconque des revendications 1 à 7, **caractérisé en ce que** la couche de polymère (36) appliquée par revêtement par extrusion sur le film d'aluminium (34) du film de récipient (30) présente une masse superficielle de 1 à 10 g/m², de préférence de 2 à 8 g/m².

9. Emballage à films selon l'une quelconque des revendications 1 à 8, **caractérisé en ce que** le milieu de scellement à faible température (38) comprend un revêtement préparé à partir d'une dispersion aqueuse d'éthylène-acétate de vinyle (EVA), de copolymère d'éthylène-acide acrylique (EAA), de polyéthylène (PE) ou de polypropylène (PP), un revêtement constitué d'une laque de base acrylique ou d'une masse thermofusible, d'un revêtement par extrusion constitué d'éthylène-acétate de vinyle (EVA), d'éthylène-acrylate de méthyle (EMA) ou d'un ionomère, d'un revêtement par extrusion de co- et terpolymères d'oléfines ou d'une couche de scellement à froid (coldseal).

10. Emballage à films selon l'une quelconque des revendications 1 à 9, **caractérisé en ce que** les films de polymères (35, 40) du film de couvercle (32) sont des films mono-, bi-axiaux ou non étirés de polyéthylène (PE), polypropylène (PP), polyéthylènetéréphtalate (PET), polyamide (PA) ou polylactide (acide polylactique, PLA).
